# EUROPÄISCHE PATENTSCHRIFT

(11) **EP 0 705 179 B1**
(45) Veröffentlichungstag und Bekanntmachung des Hinweises auf die Patenterteilung: **20.11.1996**
(21) Anmeldenummer: 94918232.3
(22) Anmeldetag: 22.06.1994
(51) Int. Cl.: B60P 1/64

(54) **VERLADEVORRICHTUNG FÜR CONTAINER OD. DGL.**
LOADING DEVICE FOR CONTAINERS OR THE LIKE
DISPOSITIF DE CHARGEMENT DE CONTENEURS OU CHARGES SIMILAIRES

(30) Priorität: 23.06.1993 AT 1233/93
(43) Veröffentlichungstag der Anmeldung: 10.04.1996
(73) Patentinhaber: WINTER, Udo, 4020 Linz (AT); MARTIN, Werner, 8045 Graz (AT); SCHABELREITER, Johann, 8132 Pernegg (AT)
(72) Erfinder: SCHABELREITER, Johann, A-8132 Pernegg (AT); WUNDER, Johannes, A-3224 Mitterbach (AT)
(74) Vertreter: Hübscher, Gerhard, Dipl.-Ing.
(86) Internationale Anmeldenummer: AT9400081
(87) Internationale Veröffentlichungsnummer: WO9500357

(56) Entgegenhaltungen:
- DE-B- 2 201 683
- FR-A- 2 106 592
- FR-A- 2 650 979
- GB-A- 1 512 633

## Beschreibung

Die Erfindung bezieht sich auf eine Verladevorrichtung für Container od. dgl. mit einem Paar auf einem Fahrgestell aufbaubarer Ladeeinheiten, die jeweils eine um eine gemeinsame, in Längsmitte des Fahrgestells verlaufende Schwenkachse schwenkverstellbar an einer Konsole abgestützte Teleskopsäule aus einem unteren Fußteil und einem ausfahrbaren Kopfteil sowie beidseits an der Teleskopsäule angreifende Stellzylinder und beidseits an der Konsole ausschwenkbar gelagerte, längsverstellbare Stützfüße aufweisen, wobei der Kopfteil der Teleskopsäulen einen um eine zur Teleskopsäulenschwenkachse parallele Schwenkachse nach beiden Seiten schwenkverstellbaren Auslegerarm mit einem Widerlager zum Anschluß eines Lastaufnahmemittels, beispielsweise eines Traggeschirrs, trägt.

Wie beispielsweise die AT-PS 284 714 zeigt, sind bisher bei solchen Verladevorrichtungen die Stellzylinder verschiebbar an den um horizontale Längsachsen verschwenkbaren Stützfüßen abgestützt und greifen am Kopfteil der Teleskopsäulen an, welcher Kopfteil selbst mit den Lastaufnanmemitteln bestückt ist und die Lastaufnahmeeinrichtung bildet. Diese bekannten Verladevorrichtungen erlauben zwar, die Container oder andere sperrige Lasten gleichermaßen nach beiden Seiten des Fahrgestelles zu verladen und die Lasten von einer eigenen Ladefläche seitlich auf den Boden oder auf ein längsseits stehendes anderes Fahrzeug ab- bzw. umzuladen oder auch Lasten von einem längsseits stehenden anderen Fahrzeug zu übernehmen bzw. abzuladen, doch entsteht durch die gegenseitige Lage- und Bewegungsabhängigkeit von Teleskopsäulen, Stellzylindern und Stützfüßen ein sehr aufwendiges und umständliches Verladesystem, das für seine Be- und Entladebewegungen relativ große Freiräume erfordert und bei engen Platzverhältnissen und insbesondere im Gefahrenbereich einer Eisenbahnoberleitung od. dgl. nur recht beschränkt einsatzfähig ist. Dazu kommt noch, daß auch die in der gleichen Schwenkebene wie die Teleskopsäulen bewegbaren Stützfüße entsprechenden Seitenraum zum Ausschwenken brauchen, was zur Überbrückung von längsseitig stehenden Fahrzeugen oder anderen seitlichen Hindernissen oft zusätzliche Klappstützen od. dgl. notwendig macht und damit die gewünschte Stabilität der Abstützung beeinträchtigt.

Gemäß der FR-A 2 106 592, welche den nächstliegenden Stand der Technik darstellt, gibt es auch schon eine Verladeeinrichtung mit Ladeeinheiten, die jeweils einen auf einer Teleskopsäule angelenkten Auslegerarm aufweisen, wobei der zweiarmige Auslegerarm über einen Betätigungszylinder gegenüber der Teleskopsäule verschwenkbar ist und die Teleskopsäule mit zwei Stellzylindern zusammenwirkt, die am den Auslegerarm tragenden Kopfteil angreifen. Dadurch fährt das Teleskop mit den Anlenkpunkten der Stellzylinder aus und verändert damit die Zylinderanstellwinkel, so daß Höhenkorrekturen die Seitenrichtungen beeinflussen und eine definierte Arbeitsweise unmöglich machen. Außerdem wird der Auslegerarm als unter Last verstellbarer Kranarm eingesetzt, der eine aktive Hubfunktion wahrzunehmen hat, wodurch sich der Steuerungsaufwand und die Steuerungsunsicherheit weiter erhöhen.

Der Erfindung liegt daher die Aufgabe zugrunde, diese Mängel zu beseitigen und eine Verladevorrichtung der eingangs geschilderten Art zu schaffen, die sich durch ihren verhältnismäßig einfachen und kompakten Aufbau, ihre Robustheit und Funktionssicherheit und ihren im Vergleich zum Verladebereich geringen Platzbedarf auszeichnet.

Die Erfindung löst diese Aufgabe dadurch, daß die Stellzylinder am Fußteil der Teleskopsäule angreifen, deren Kopfteil Endanschläge zur starren Abstutzung beidseitiger Schwenklagen des Auslegerarms bildet und daß die Stützfüße vorzugsweise um zur Teleskopsäulenschwenkachse normale, zur Horizontalen schräggeneigte Schwenkachsen schwenkverstellbar gelagert sind. Durch das Zusammenwirken der Stellzylinder mit den Teleskopsäulen und den an den Teleskopsäulen angelenkten Auslegerarmen kommt es je nach Schwenklage der Auslegerarme nach der einen oder anderen Seite zu ausreichend großen seitlichen Ladebereichen, ohne dazu weitausholende und hochreichende Schwenkbewegungen der Teleskopsäulen vornehmen zu müssen. Da die Stellzylinder am Fußteil der Teleskopsäule angreifen, wird eine klare Trennung zwischen Schwenkbewegung und Ausfahrbewegung der Teleskopsäule und damit eine exakte Arbeitsweise erreicht, wobei ein Verschwenken und gleichzeitiges Aus- oder Einfahren der Teleskopsäulen zu einer mehr oder weniger geradlinigen Quer- oder Hebe- bzw. Senkbewegung der Last führen, was einen Be- und Entladevorgang auch auf engstem Raum ermöglicht. Wegen der Endanschläge für die Auslegerarme wirken diese als starrer Ausleger der Teleskopsäule, der während der gesamten Huboperation in einer definierten Schwenklage verbleibt, so daß zum lastfreien Umschwenken eine einfache Stelleinrichtung, beispielsweise zwei kleine Schwenkzylinder, genügt, wodurch eine aufwandsarme, robuste und einwandfrei ansteuerbare Konstruktion entsteht. Die jeweils für sich allein ausschwenkbaren Stützfüße brauchen nicht mehr unter Berücksichtigung der Teleskopsäulenbetätigung gesetzt zu werden, sondern lassen sich einfach im Sinne einer zweckmäßigen Abstutzung positionieren, wobei ihre bevorzugte schräge Schwenkverstellbarkeit oft die Möglichkeit bietet, daß sie eben auch seitlich schräg unter die Ladefläche od. dgl. eines längsseits stehenden Fahrzeuges einschwenken können und die für eine gute Abstützung erforderliche Auslage erreichen.

Günstig ist es auch, wenn die Konsolen beider Ladeeinheiten jeweils für sich am Fahrgestell längsverschiebbar geführt sind, wobei vorteilhafterweise die Konsolen Auflager für die Container od. dgl. aufweisen, da durch diese Einzelverstellung der Konsolen nicht nur die Möglichkeit einer Anpassung der Ladevorrichtung an unterschiedlich große Container od. dgl. gegeben ist, sondern sich auch die Ladeposition der Ladevorrichtung am Fahrgestell gegenüber der aufzunehmenden Last verändern läßt und ein umständliches Manövrieren des Fahrzeuges für den einwandfreien Be- oder Entladevorgang durch ein einfaches Positionieren der Ladevorrichtung am Fahrgestell ersetzt werden kann. Dazu kommt noch, daß die aufgenommenen Container auf den konsolenfesten Auflagern absetzbar und dann diese Container mittels der verfahrbaren Konsolen relativ zum Fahrgestell verschiebbar sind, was wiederum eine optimale Abstimmung zwischen Lade- bzw. Entladevorgang und Transportposition erlaubt.

Um die maximale Ladehöhe minimieren zu können, ist es möglich, die Widerlager zum Anschluß eines Lastaufnahmemittels in Richtung der Auslegerarmschwenkachse schiebeverstellbar am Auslegerarm anzuordnen, so daß die Widerlager nach dem Absetzen der Last auf dem Fahrgestell durch ein Zurückziehen von der Last freikommen und sich die Ausleger für den Transport neben den Containern absenken lassen, wodurch die Last selbst die maximale Ladehöhe bestimmt.

In der Zeichnung ist der Erfindungsgegenstand rein schematisch veranschaulicht, und zwar zeigen
- Fig. 1 und 2: ein Fahrzeug mit erfindungsgemäßer Verladevorrichtung in Seiten- bzw. Rückansicht und
- Fig. 3: dieses Fahrzeug beim Ladevorgang in Rückansicht.

Auf einem Fahrgestell 1, beispielsweise einem Sattelanhänger eines Sattelzuges, ist eine Verladevorrichtung aus zwei Ladeeinheiten 2 aufgebaut, wobei Jede Ladeeinheit 2 aus einer Konsole 3, einer auf der Konsole um eine in Längsmitte des Fahrgestells 1 verlaufende Schwenkachse I schwenkbar abgestützten Teleskopsäule 4, zwei beidseits an der Teleskopsäule 4 angreifenden Stellzylindern 5 sowie nach beiden Seiten hin abschwenkbaren Stützfüßen 6 besteht. Die Stellzylinder 5 und die Stützfüße 6 sind unabhängig voneinander an der Konsole 3 angelenkt, wobei die Stützfüße 6 über entsprechende Betätigungszylinder 7 um zur Teleskopsäulenschwenkachse I normale, zur Horizontalen schräggeneigte Schwenkachsen II schwenkverstellbar gelagert sind. Am ausfahrbaren Kopfteil 8 der Teleskopsäulen 4 sitzt ein Auslegerarm 9, der um eine zur Teleskopsaulenschwenkachse I parallele Schwenkachse III zwischen zwei Endanschlägen 10 schwenkverstellbar angeordnet ist und über Schwenkzylinder 11 von der einen in die andere Schwenkstellung gebracht werden kann. Am freien Ende des Auslegerarmes 9 ist ein Widerlager 12 zum Anschluß eines Traggeschirrs 13 vorgesehen, welches Widerlager 12 in Richtung der Auslegerarmschwenkachse III von einer Transportstellung in eine Ladestellung ausfahrbar ist. Die Konsolen 3 sind jeweils für sich entlang von Längsführungen 14 des Fahrgestells 1 längsverstellbar geführt, wobei die Konsolen gemeinsam oder unabhängig voneinander bewegt werden können. An den einander zugekehrten Stirnseiten bilden die Konsolen 3 Auflager 15 zum Absetzen der aufgenommenen Container L.

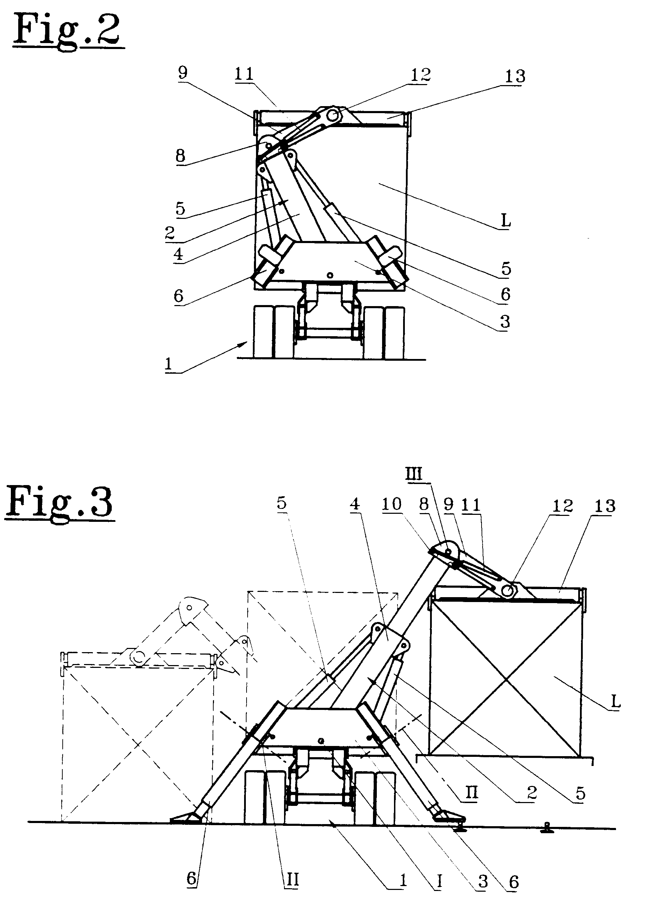

Zum Verladen eines Containers L werden, wie in Fig. 3 angedeutet, die Stützfüße 6 seitlich ausgeschwenkt und durch geeignete Längsverstellung am Boden bzw. auf einer Eisenbahnschiene od. dgl. aufgesetzt. Der Auslegerarm 9 wird in die Laderichtung geschwenkt, wobei sich durch den Endanschlag 10 eine starre Abstützung für die Lastaufnahme ergibt. Nun kann die Ladevorrichtung über die Stellzylinder 5 seitlich ausgeschwenkt werden, bis das am Auslegerarm 9 befestigte Traggeschirr 13 am Container L od. dgl. angesetzt werden kann, und durch Betätigen der Stellzylinder 5 und der Teleskopsäulen 4 läßt sich die Last anheben und auf das Fahrgestell 1 übernehmen. Soll die Last bodenwärts abgestellt werden, müßte nun der Auslegerarm 9 umgeschwenkt und der Container wieder vom Fahrgestell hochgehoben und seitlich abgesetzt werden (strichlierte Darstellung).

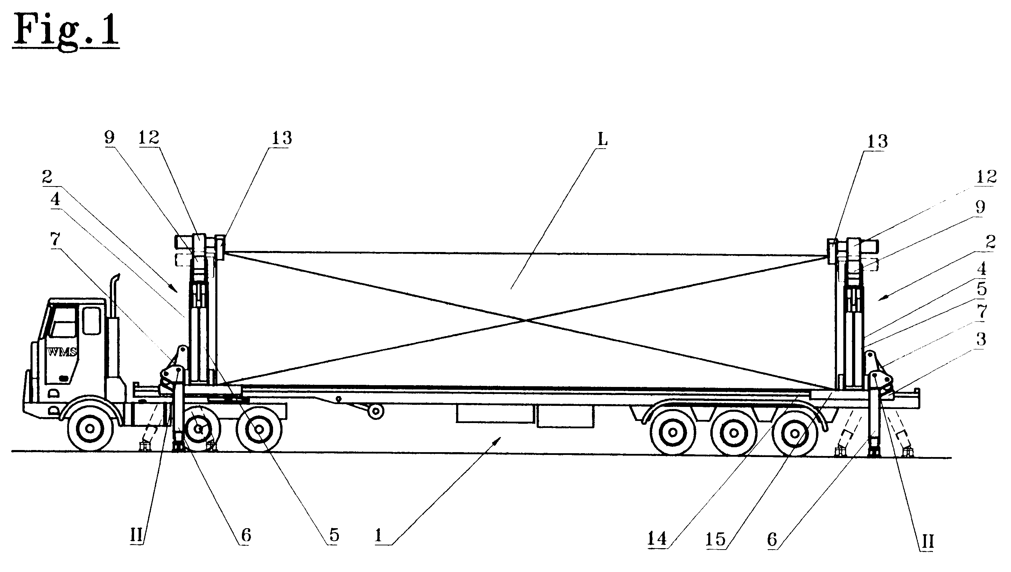

Wird ein Container auf das Fahrgestell 1 aufgeladen, kann er hier auf die Auflager 15 der Konsolen 3 abgesetzt werden, so daß die Belastung über die Konsolen auf das Fahrgestell übertragen wird und außerdem die Möglichkeit besteht, die aufgeladenen Container durch Verschieben der Konsolen 3 relativ zum Fahrgestell 1 längszubewegen, was bei ungünstiger Verladestellung des Fahrgestells eine transportgerechte nachträgliche Positionierung des Containers am Fahrgestell 1 erlaubt. Sobald der Container abgesetzt ist, kann das Geschirr 13 abgenommen und das Widerlager 12 zurückgezogen werden (strichpunktierte Darstellung in Fig. 1), womit ein Absenken der Ladeeinheiten unter die Containeroberseite zur Verringerung der Transporthöhe möglich ist.

Die erfindungsgemäße Verladevorrichtung führt bei einfacher und robuster Konstruktion zu einem rationellen, platzsparend einsetzbaren Containerverladekonzept.

## Patentansprüche

1. Verladevorrichtung für Container (L) od. dgl., mit einem Paar auf einem Fahrgestell (1) aufbaubarer Ladeeinheiten (2), die jeweils eine um eine gemeinsame, in Längsmitte des Fahrgestells (1) verlaufende Schwenkachse (I) schwenkverstellbar an einer Konsole (3) abgestützte Teleskopsäule (4) aus einem unteren Fußteil und einen ausfahrbaren Kopfteil (8) sowie beidseits an der Teleskopsäule (4) angreifende Stellzylinder (5) und beidseits an der Konsole (3) ausschwenkbar gelagerte, längsverstellbare Stützfüße (6) aufweisen, wobei der Kopfteil (8) der Teleskopsäulen (4) einen um eine zur Teleskopsäulenschwenkachse (II) parallele Schwenkachse (III) nach beiden Seiten schwenkverstellbaren Auslegerarm (9) mit einem Widerlager (12) zum Anschluß eines Lastaufnahmemittels, beispielsweise eines Traggeschirrs (13), trägt, dadurch gekennzeichnet, daß die Stellzylinder (5) am Fußteil der Teleskopsäule (4) angreifen, deren Kopfteil (8) Endanschläge (10) zur starren Abstützung beidseitiger Schwenklagen des Auslegerarms (9) bildet und daß die Stützfüße (6) vorzugsweise um zur Teleskopsäulenschwenkachse (I) normale, zur Horizontalen schräggeneigte Schwenkachsen (II) schwenkverstellbar gelagert sind.

2. Verladevorrichtung nach Anspruch 1, dadurch gekennzeichnet, daß die Konsolen (3) beider Ladeeinheiten jeweils für sich am Fahrgestell (1) längsverschiebbar geführt sind.

3. Verladevorrichtung nach einem der Ansprüche 1 oder 2, dadurch gekennzeichnet, daß die Konsolen (3) Auflager für die Container (L) od. dgl. aufweisen.

4. Verladevorrichtung nach einem der Ansprüche 1 bis 3, dadurch gekennzeichnet, daß die Widerlager (12) zum Anschluß eines Lastaufnahmemittels (13) in Richtung der Auslegerarmschwenkachse (III) schiebevorstellbar am Auslegerarm angeordnet sind.

## Claims

1. A loading device for containers (L) or the like, comprising a pair of loading units (2) mounted on a chassis (1) and each comprising a telescopic column (4) supported on a bracket (3) so as to be pivotable around a common axis (I) extending in the longitudinal centre of the chassis (1) and having a bottom foot part and an extendable head part (8) and positioning cylinders (5) engaging the telescopic column (4) on each side and longitudinally adjustable supporting feet (6) mounted for pivoting on both sides of the bracket (3), the head part (8) of the telescopic columns (4) having an extension arm (9) pivotable on both sides around an axis (III) parallel to the pivoting axis (II) of the telescopic column and with an abutment (12) for connecting a load-receiving means such as a carrying strap (13), characterised in that the positioning cylinders (5) engage the foot part of the telescopic column (4), the head part (8) of which forms end abutments (10) for rigidly supporting pivot bearings of the extension arm (9) on each side, and the supporting feet (6) are mounted so as to be pivotable preferably around axes (II) at right angles to the axis (I) but at an angle to the horizontal.

2. A loading device according to claim 1, characterised in that the brackets (3) of both loading units are guided so as to be independently adjustable longitudinally on the chassis (1).

3. A loading device according to claim 1 or 2, characterised in that the brackets (3) have supports for the containers (L) or the like.

4. A loading device according to any of claims 1 to 3, characterised in that the abutments (12) are disposed on the extension arm for connecting a load-receiving means (13) so as to be adjustable by sliding in the direction of the extension-arm pivoting axis (III).

## Revendications

1. Dispositif de chargement pour des conteneurs (L) ou similaires, comprenant une paire d'unités de chargement (2) qui peuvent être montées sur un châssis (1) et qui comportent chacune une colonne télescopique (4), cependant que celle-ci s'appuie sur une console (3) en pouvant être déplacée en pivotement autour d'un axe de pivotement commun (I) qui s'étend selon l'axe longitudinal du châssis (1) et qu'elle est constituée par une partie inférieure de base et par une partie supérieure (8) qui peut être extraite d'une manière télescopique, ainsi que des vérins de déplacement (5) qui viennent en prise des deux côtés avec la colonne télescopique (4) et des béquilles (6) qui sont montées pivotantes des deux côtés sur la console (3) et qui peuvent être déplacées dans le sens longitudinal, et cependant que la partie supérieure (8) des colonnes télescopiques (4) porte un bras formant flèche (9) qui peut être déplacé en pivotement vers les deux côtés autour d'un axe de pivotement (III) parallèle à l'axe de pivotement (II) des colonnes télescopiques et qui comprend un contre-appui (12) destiné au raccordement d'un moyen de suspension de la charge, et par exemple d'une poutre porteuse (13), caractérisé par le fait que les vérins de déplacement (5) viennent en prise avec la partie de base de la colonne télescopique (4) dont la partie supérieure (8) forme des butées finales (10) en vue de l'appui rigide des positions en pivotement du bras formant flèche (9) des deux côtés, et par le fait que les béquilles (6) sont montées en pouvant pivoter de préférence autour d'axes de pivotement (II) qui sont perpendiculaires à l'axe de pivotement (I) de la colonne télescopique et qui sont inclinés par rapport à l'horizontale.

2. Dispositif de chargement selon la revendication 1, caractérisé par le fait que les consoles (3) des deux unités de chargement sont guidées chacune pour elle-même en pouvant se déplacer sur le châssis (1) dans le sens longitudinal.

3. Dispositif de chargement selon l'une des revendications 1 et 2, caractérisé par le fait que les consoles (3) présentent des surfaces d'appui pour les conteneurs (L) ou similaires.

4. Dispositif de chargement selon l'une des revendications 1 à 3, caractérisé par le fait que les contre-appuis (12) sont disposés sur le bras formant flèche en pouvant coulisser dans la direction de l'axe de pivotement (III) du bras formant flèche en vue du raccordement d'un moyen de suspension de la charge (13).
